# EUROPÄISCHE PATENTSCHRIFT

(11) **EP 3 960 539 B1**
(45) Veröffentlichungstag und Bekanntmachung des Hinweises auf die Patenterteilung: **27.11.2024**
(21) Anmeldenummer: 21193615.8
(22) Anmeldetag: 27.08.2021
(51) Int. Cl.: B60P 3/36

(54) **UMBAUBARE SITZBANK FÜR EIN FREIZEITFAHRZEUG**
CONVERTIBLE SEAT BENCH FOR A LEISURE VEHICLE
BANQUETTE CONVERTIBLE POUR UN VÉHICULE DE LOISIR

(30) Priorität: 27.08.2020 DE 102020122496
(43) Veröffentlichungstag der Anmeldung: 02.03.2022
(73) Patentinhaber: Niesmann+Bischoff GmbH, 56751 Polch (DE)
(72) Erfinder: SCHÖNHORST, Martin, 63477 Maintal (DE); KLOTHMANN, Christian, 21635 Jork (DE); MÜLLER, Helena, 65428 Rüsselsheim (DE)
(74) Vertreter: Müller Schupfner & Partner Patent- und Rechtsanwaltspartnerschaft mbB (Muc)

(56) Entgegenhaltungen:
- EP-A1- 2 578 441
- DE-U1- 202006 013 033
- DE-U1- 202020 101 901
- GB-A- 2 531 167

## Beschreibung

Die Erfindung betrifft eine umbaubare Sitzbank für ein Freizeitfahrzeug sowie ein Freizeitfahrzeug mit einer solchen Sitzbank.

Im Stand der Technik sind Freizeitfahrzeuge bekannt. Unter einem Freizeitfahrzeug wird ein Fahrzeug oder Anhänger verstanden, welches oder welcher zumindest ein mobil einsetzbares Element zum Camping aufweist oder zumindest temporär eine Einrichtung zum Campen aufweisen kann. Unter einem Freizeitfahrzeug wird insbesondere ein Campingfahrzeug verstanden. Unter einem Freizeitmobil wird ein motorisiertes Freizeitfahrzeug verstanden. Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil. Ein Wohnwagen kann zum Beispiel alternativ als Caravan oder Campinganhänger bezeichnet werden.

Im Segment der Kastenwagen und Teilintegrierten sind im Stand der Technik ausziehbare Sitzbänke bekannt, welche jedoch keine Längssitzbank vorsehen. Im Stand der Technik gibt es bisher an dieser Position lediglich einen einzigen Gurtsitzplatz. Falls dort zwei Gurtsitzplätze angebracht würden, würde die Sitzbank zu weit in den Innenraum hineinragen und die Beweglichkeit im Fahrzeug wäre äußerst eingeschränkt.

Aus der DE 20 2006 013 033 U1 ist eine Sitzgruppe nach dem Oberbegriff des Anspruchs 1 bekannt.

Eine Aufgabe der vorliegenden Erfindung liegt darin, den Stand der Technik zu verbessern. Es ist insbesondere eine Aufgabe der Erfindung, eine umbaubare Sitzbank für ein Freizeitfahrzeug anzugeben, welche in einem Wohnsitzzustand eine Wohnsitzgruppe mit gegenüberliegenden Sitzbänken und in einem Fahrtzustand zwei insbesondere zugelassene Gurtsitzplätze in Fahrtrichtung, insbesondere auf der linken Fahrzeugseite, aufweist. Bei der ordnungsgemäßen Lösung soll so wenig wie möglich umgebaut werden und der Umbau soll so einfach wie möglich erfolgen. Ferner sollen zusätzliche Teile vermieden werden.

Diese Aufgabe wird durch eine umbaubare Sitzbank für ein Freizeitfahrzeug mit den Merkmalen des unabhängigen Patentanspruchs 1 gelöst. Vorteilhafte Weiterbildungen der Erfindung sind in den Unteransprüchen angegeben.

Folgendes Begriffliche sei erläutert:
Die Sitzbank weist ein längliches Sitzbankelement auf, welches bevorzugt ein erstes und ein zweites Sitzelement aufweist.

Falls eine Längsachse des Sitzbankelements längs oder parallel zur Fahrtrichtung orientiert ist, so blicken die Nutzer der Sitzbank senkrecht zur Fahrtrichtung. Dies entspricht der Wohnsitzsituation im Wohnsitzzustand. Falls die Längsachse des Sitzbankelements quer oder senkrecht zur Fahrtrichtung orientiert ist, so blicken die Nutzer der Sitzbank parallel zur Fahrtrichtung. Dies entspricht dem Fahrtzustand. Gemäß einer weiteren Ausführungsform ist der Mechanismus ausgeführt und eingerichtet, das Sitzbankelement ausgehend vom Wohnsitzzustand um +90° oder - 90° zu drehen. Hierbei erfolgt die Drehung um eine vertikale, nach oben zeigende Drehachse. Bevorzugt wird das Sitzbankelement um eine vertikale, nach oben zeigende Drehachse im Uhrzeigersinn gedreht.

Gemäß einer anderen Ausführungsform sind Rückenpolster des Sitzbankelements nicht fest mit dem Sitzbankelement verbunden. Bevorzugt sind die Rückenpolster des Sitzbankelements mit dem Sitzbankelement reversibel lösbar verbunden. Dies hat den Vorteil, dass die Rückenpolster umsetzbar sind.

Die umbaubare Sitzbank weist ein Gurtgestell auf, welches im Fahrtzustand in Fahrtrichtung gesehen hinter dem das Sitzbankelement angeordnet ist.

Bevorzugt ist die Sitzbank in Fahrtrichtung auf der linken Seite des Freizeitfahrzeugs angeordnet.

Gemäß einer weiteren Ausführungsform ist das Gurtgestell senkrecht zur Fahrtrichtung ausziehbar. Bevorzugt ist das Gurtgestell senkrecht zur Fahrtrichtung, insbesondere auf die rechte Seite der Fahrtrichtung, ausziehbar, so dass dasjenige Sitzelement, welches von einer Drehachse des Mechanismus weiter entfernt ist, mit einem Gurt versehbar ist. Dies hat den Vorteil, dass das Gurtgestell im Wohnsitzzustand nicht störend in den Wohnbereich hineinragt und im Fahrtzustand für den zur Fahrtrichtung gesehen rechten Sitz als Gurtgestell dienen kann.

Ein Kerngedanke der Erfindung besteht in der Kombination des ausziehbaren Gurtgestelles für den zweiten Sitzplatz mit der drehbaren Sitzfläche sowie dem Umsetzen der Rückenpolster.

Der Vorteil besteht darin, dass in der Wohnsituation kein störender Sitz in den Raum ragt und dadurch die Sitzgruppe mit Tisch gut nutzbar ist. In der Fahrposition können auf der linken Fahrzeugseite zwei Gurtsitzplätze zur Verfügung gestellt werden, die nach Gebrauch wieder einfach zur Wohnsitzgruppe umbaubar sind.

In einem weiteren Aspekt wird die Aufgabe der Erfindung gelöst durch ein Freizeitfahrzeug mit einer oben beschriebenen umbaubaren Sitzbank.

Ein Ausführungsbeispiel der Erfindung ist in den Zeichnungen dargestellt und wird in der nachfolgenden Beschreibung näher erläutert.
Figur 1 zeigt eine umbaubare Sitzbank für ein Freizeitfahrzeug gemäß einer Ausführungsform der Erfindung in einem Wohnsitzzustand.
Figur 2 zeigt die umbaubare Sitzbank der Figur 1 in einem Fahrtzustand.

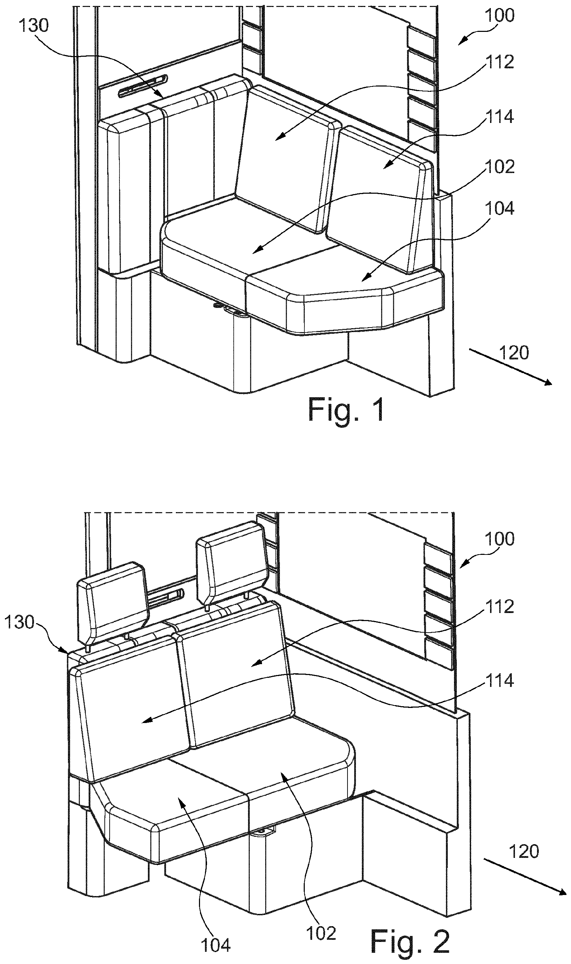

Figur 1 zeigt die Sitzbank 100 für ein Freizeitfahrzeug in einem Wohnsitzzustand. Die Sitzbank 100 weist ein längliches Sitzbankelement zum Sitzen auf, welches ein erstes Sitzelement 102 und ein zweites Sitzelement 104 aufweist. Hierbei verläuft eine Längsachse des Sitzbankelements und auch der Sitzbank 100 parallel zur Fahrtrichtung 120.

Das erste Sitzelement 102 weist ein erstes Rückenpolster 112 und das zweite Sitzelement 104 weist ein zweites Rückenpolster 114 auf. Vom ersten Sitzelement 102 aus gesehen befindet sich auf der rechten Seite ein ausziehbares Gurtgestell 130, welches in der Figur 1 nicht ausgezogen ist, da es hier nicht verwendet wird.

Ausgehend von Figur 1 erreicht man den Fahrtzustand der Figur 2, indem man zunächst das erste Rückenpolster 112 und das zweite Rückenpolster 114 vom ersten Sitzelement 102 und vom zweiten Sitzelement 104 entfernt. Danach wird die Gruppe bestehend aus dem ersten Sitzelement 102 und dem zweiten Sitzelement 104 um das erste Sitzelement 102 um eine vertikal nach oben zeigende Drehachse um 90° im Uhrzeigersinn gedreht und das erste Rückenpolster 112 und das zweite Rückenpolster 114 wird am ersten Sitzelement 102 und dem zweiten Sitzelement 104 auf der jeweils anderen Seite wie zuvor angebracht. Sodann wird das Gurtgestell 130 in Richtung der Fahrtrichtung 120 nach rechts ausgezogen, sodass ein Gurt am zweiten Sitzelement 104 verwendet werden kann. Aus dem Gurtgestell 130 können weiterhin zwei Kopflehnen nach oben ausgefahren bzw. ausgezogen werden.

## Patentansprüche

1. Umbaubare Sitzbank (100) für ein Freizeitfahrzeug,
wobei die Sitzbank (100) ein Sitzbankelement (102, 104) aufweist;
wobei das Sitzbankelement (102, 104) in einem Wohnsitzzustand parallel zur Fahrtrichtung (120) und in einem Fahrtzustand senkrecht zur Fahrtrichtung (120) orientiert ist;
wobei das Sitzbankelement (100) im Fahrtzustand mindestens zwei, insbesondere zugelassene, Gurtsitzplätze aufweist; und
wobei die Sitzbank (100) reversibel vom Wohnsitzzustand zum Fahrtzustand umbaubar ist,
**gekennzeichnet durch**
ein Gurtgestell (130), welches im Fahrtzustand in Fahrtrichtung (120) gesehen hinter dem Sitzbankelement (102, 104) angeordnet ist. und
einen Mechanismus, mit welchem das Sitzbankelement (102, 104) drehbar ist.

2. Sitzbank (100) nach Anspruch 1,
**dadurch gekennzeichnet, dass**
der Mechanismus ausgeführt und eingerichtet ist, das Sitzbankelement (102, 104) ausgehend vom Wohnsitzzustand um +90° oder -90° zu drehen.

3. Sitzbank (100) nach einem der vorangegangenen Ansprüche,
**dadurch gekennzeichnet, dass**
Rückenpolster (112, 114) des Sitzbankelement (102, 104) reversibel lösbar mit dem Sitzbankelement (102, 104) verbunden sind.

4. Sitzbank (100) nach dem vorangegangenen Anspruch,
**dadurch gekennzeichnet, dass**
das Sitzbankelement (102, 104) in Fahrtrichtung (120) auf der linken Seite des Freizeitfahrzeugs angeordnet ist.

5. Sitzbank (100) nach Anspruch 4 oder 5,
**dadurch gekennzeichnet, dass**
das Gurtgestell (130) senkrecht zur Fahrtrichtung (120) ausziehbar ist.

6. Sitzbank (100) nach dem vorangegangenen Anspruch,
**dadurch gekennzeichnet, dass**
das Gurtgestell (130) senkrecht zur Fahrtrichtung (120) , insbesondere auf die rechte Seite der Fahrtrichtung (120), ausziehbar ist, so dass dasjenige Sitzelement (102, 104), welches von einer Drehachse des Mechanismus weiter entfernt ist, mit einem Gurt versehbar ist.

7. Freizeitfahrzeug mit einer umbaubaren Sitzbank (100) gemäß einem der vorangegangenen Ansprüche.

## Claims

1. Convertible seat bench (100) for a recreational vehicle, the seat bench (100) comprising a seat bench element (102, 104)
wherein the seat bench element (102, 104) is oriented parallel to the direction of travel (120) in a living seating condition and perpendicular to the direction of travel (120) in a driving condition;
wherein the seat bench element (100) has at least two, in particular approved, belt seats in the driving condition and
wherein the seat bench (100) is reversibly convertible from the living seating condition to the driving condition,
**characterized by**
a belt frame (130) which is arranged behind the seat bench element (102, 104) as seen in the direction of travel (120) in the driving position, and
a mechanism with which the seat bench element (102, 104) is rotatable.

2. Seat bench (100) according to claim 1, **characterized in that** the mechanism is designed and arranged to rotate the seat element (102, 104) by +90° or -90° starting from the seating condition.

3. Seat bench (100) according to one of the preceding claims,
**characterized in that**
back cushions (112, 114) of the seat bench element (102, 104) are reversibly detachably connected to the seat bench element (102, 104).

4. Seat bench (100) according to the preceding claim, **characterized in that** the seat bench element (102, 104) is arranged on the left side of the recreational vehicle in the direction of travel (120).

5. Seat bench (100) according to claim 4 or 5, **characterized in that**
the belt frame (130) is extendible perpendicular to the direction of travel (120).

6. Seat bench (100) according to the preceding claim,
**characterized in that**
the belt frame (130) is extendible perpendicularly to the direction of travel (120), in particular to the right-hand side of the direction of travel (120), so that the seat element (102, 104) which is further away from an axis of rotation of the mechanism can be provided with a belt.

7. A recreational vehicle comprising a convertible seat bench (100) according to any one of the preceding claims.

## Revendications

1. Banquette transformable (100) pour un véhicule de loisirs,
dans laquelle la banquette (100) présente un élément de banquette (102, 104) ;
dans laquelle l'élément de banquette (102, 104) est orienté, dans un état d'habitation, parallèlement à la direction de conduite (120) et, dans un état de conduite, perpendiculairement à la direction de conduite (120) ;
dans laquelle l'élément de banquette (100), dans l'état de conduite, présente au moins deux places assises avec ceinture, en particulier autorisées ; et
dans laquelle la banquette (100) est transformable de manière réversible depuis l'état d'habitation jusqu'à l'état de conduite,
**caractérisée par**
un châssis à ceinture (130) qui, dans l'état de conduite, est agencé derrière l'élément de banquette (102, 104) vu dans la direction de conduite (120), et un mécanisme avec lequel l'élément de banquette (102, 104) peut être mis en rotation.

2. Banquette (100) selon la revendication 1,
**caractérisée en ce que**
le mécanisme est réalisé et configuré pour mettre en rotation l'élément de banquette (102, 104) de +90° ou de -90°, à partir de l'état d'habitation.

3. Banquette (100) selon l'une des revendications précédentes,
**caractérisé en ce que**
le rembourrage de dossier (112, 114) de l'élément de banquette (102, 104) est lié à l'élément de banquette (102, 104) de façon à pouvoir être détaché de manière réversible.

4. Banquette (100) selon la revendication précédente,
**caractérisée en ce que**
l'élément de banquette (102, 104) est agencé, dans la direction de conduite (120), sur le côté gauche du véhicule de loisirs.

5. Banquette (100) selon la revendication 4 ou 5,
**caractérisée en ce que**
le châssis à ceinture (130) est extensible perpendiculairement à la direction de conduite (120).

6. Banquette (100) selon la revendication précédente,
**caractérisée en ce que**
le châssis à ceinture (130) est extensible perpendiculairement à la direction de conduite (120), en particulier sur le côté droit de la direction de conduite (120), de telle sorte que l'élément de siège (102, 104) qui est le plus éloigné d'un axe de rotation du mécanisme peut être doté d'une ceinture.

7. Véhicule de loisirs comprenant une banquette transformable (100) selon l'une des revendications précédentes.
